# EUROPÄISCHE PATENTSCHRIFT

(11) **EP 2 136 905 B1**
(45) Veröffentlichungstag und Bekanntmachung des Hinweises auf die Patenterteilung: **31.05.2017**
(21) Anmeldenummer: 08735141.7
(22) Anmeldetag: 10.04.2008
(51) Int. Cl.: B01D 61/50, C02F 1/469, H01M 8/10

(54) **IONENDURCHLÄSSIGE MEMBRAN UND IHRE HERSTELLUNG**
ION-PERMEABLE MEMBRANE AND ITS MANUFACTURE
MEMBRANE LAISSANT PASSER LES IONS ET SA FABRICATION

(30) Priorität: 10.04.2007 EP 07007302
(43) Veröffentlichungstag der Anmeldung: 30.12.2009
(73) Patentinhaber: FUMATECH BWT GmbH, 74321 Bietigheim-Bissingen (DE)
(72) Erfinder: BALSTER, Jörg Henning, NL-7513 EL Enschede (NL); STAMATIALIS, Dimitrios, NL-7534 JJ Enschede (NL); WESSLING, Matthias, NL-7531 EK Enschede (NL)
(74) Vertreter: Patentanwälte Ruff, Wilhelm, Beier, Dauster & Partner mbB
(86) Internationale Anmeldenummer: PCT/EP2008/002832
(87) Internationale Veröffentlichungsnummer: WO 2008/122442

(56) Entgegenhaltungen:
- WO-A-02/14224
- US-A- 3 896 015
- US-A1- 2003 041 444
- US-A1- 2005 082 215
- US-A1- 2006 016 685
- US-A1- 2006 279 025

## Beschreibung

Die vorliegende Erfindung betrifft ein Verfahren zur Herstellung einer ionendurchlässigen Membran mit profilierter Oberfläche, eine ionendurchlässige Membran, die insbesondere nach einem solchen Verfahren herstellbar ist, eine Membrananordnung, die mindestens eine solche ionendurchlässige Membran umfasst und ein Verfahren zur elektrodialytischen Entsalzung von Flüssigkeiten, bei dem mindestens eine solche Membrananordnung eingesetzt wird.

Entsalzungsverfahren für Flüssigkeiten wie z.B. Wasser sind von großer technischer Bedeutung. Beispielhaft kann hierfür die Trinkwassergewinnung sowie die Herstellung hochreiner Prozesswässer für die Industrie angeführt werden. Bekannte Verfahren zur Entsalzung schließen insbesondere Ionenaustauschverfahren, Reversosmose und elektrochemische Membranprozesse ein. Unter letzteren ist insbesondere die Elektrodialyse hervorzuheben, bei der lonentauschermembranen in Kombination mit einer elektrischen Potentialdifferenz eingesetzt werden, um ionische Spezies aus Lösungsmitteln abzutrennen.

In einer üblichen Elektrodialysevorrichtung sind zwischen zwei Elektroden abwechselnd Anionen- und Kationentauschermembranen insbesondere stapelartig oder gewickelt angeordnet. Benachbarte lonentauschermembranen bilden separate "Kammern" aus, durch die eine zu entsalzende Flüssigkeit geleitet werden kann. Größere Systeme können mehrere hundert dieser Kammern umfassen. Wird eine elektrische Gleichspannung an die Elektroden angelegt, so wandern in der Flüssigkeit enthaltene Anionen in Richtung Anode. Die Anionen können positiv geladene Anionentauschermembranen passieren, sie werden aber an der jeweils nächstgelegenen negativ geladenen Kationentauschermembran gestoppt. In der Flüssigkeit enthaltene Kationen verhalten sich analog, allerdings mit umgekehrtem Vorzeichen. Entsprechend reichern sich Salze in der einen Hälfte der Kammern an, während die Flüssigkeit in den übrigen Kammern an Salz verarmt. Kammern, in denen sich die Konzentration an Salzen erhöht, werden als Konzentratkammern bezeichnet, die anderen als Diluatkammern. Die durch die jeweilige Kammer strömende Flüssigkeit bezeichnet man entsprechend als Konzentrat bzw. als Diluat.

Zwischen den lonentauschermembranen sind in aller Regel Spacer angeordnet. Diese haben zum einen die Funktion mechanischer Stabilisatoren, die einen definierten Abstand der lonentauschermembranen zueinander gewährleisten. Zum anderen bilden sie Hindernisse für die durch die Kammern strömende Flüssigkeit und erzeugen Turbulenzen, die Polarisationsphänomenen entgegenwirken können. Klassische Spacer weisen allerdings in aller Regel keine Ionenleitfähigkeit auf und erhöhen daher den elektrischen Gesamtwiderstand einer Abfolge von lonentauschermembranen.

Die Herstellung ionenleitender Spacer ist grundsätzlich möglich, aufgrund notwendiger chemischer Modifikationen liegen deren Herstellungskosten allerdings sehr viel höher als die vergleichbarer nichtleitender Varianten. Alternativ hat man bereits versucht, die klassischen Spacer durch Ionenaustauschpartikel zu ersetzen, was in Folge der Schwelleigenschaften solcher Partikel aber ebenfalls Probleme mit sich brachte.

Ein sehr interessanter Ansatz zur Lösung der genannten Probleme findet sich in der WO 2005/009596, in der eine Membrananordnung zur kontinuierlichen elektrodialytischen Entsalzung beschrieben wird. Diese umfasst mindestens eine Kationen- und Anionentauschermembran in paralleler Anordnung, wobei die Oberflächen der Membranen jeweils mindestens bereichsweise auf der einander zugewandten Oberflächenseite oder beiden Oberflächenseiten ein regelmäßiges Muster gleich oder verschieden gestalteter Erhebungen und/oder Vertiefungen aufweisen. Die Vertiefungen zwischen den Erhebungen bilden Kanäle aus und die Membranen stehen über die auf ihren Oberflächen angeordneten Erhebungen unter Ausbildung entsprechender Kontaktpunkte bereichsweise miteinander in Kontakt. Zwischen diesen Kontaktpunkten wird so ein sich fortlaufend verzweigendes Kanalsystem gebildet, das von Diluat bzw. von Konzentrat durchströmt werden kann. In herkömmlichen Membrananordnungen werden dafür separate Spacer eingesetzt. Diese sind bei der beschriebenen Membrananordnung entsprechend nicht mehr erforderlich, womit die oben beschriebenen Probleme entfallen.

Die Herstellung der in der WO 2005/009596 beschriebenen, mit den Erhebungen und Vertiefungen versehenen Membranen erfolgt durch Prägen, Pressen oder Walzen von thermoplastisch verformbaren Membranen. Diese weisen eine thermoplastische Matrix auf, in die ionenleitende Zusätze eingebettet sind. Das Prägen, Pressen oder Walzen erfordert allerdings entsprechendes Werkzeug sowie zur gewünschten Struktur passende inverse Profile und ist mit entsprechendem Zeitaufwand verbunden.

Aus der WO 02/14224 A1 sind eine Vorrichtung sowie ein Verfahren zur Elektrodialyse bekannt. Die Vorrichtung kann texturierte Membran aufweisen, wobei die Muster der Membranen mittels Abform- oder Prägeprozesse erzeugt sind.

Gegenstand der US 2006/0016685 A1 sind texturierte, wasserspaltende Bipolarmembranen, wobei die Muster der Membranen Erhebungen und Vertiefungen aufweisen.

Die US 2003/0041444 A1 offenbart Membrananordnungen mit mikrotexturierten Membranoberflächen.

Die US 2006/0279025 A1 offenbart ein Verfahren zum Formen eines Musters in einer Zielflächer eines Substrats.

Die US 2005/0082215 A1 betrifft mikroporöse Filter.

Die US 3,896,015 offenbart ein Verfahren zur Formung einer ionenleitenden Membran mittels Gießens zwischen zwei Formplatten.

Der vorliegenden Erfindung liegt die Aufgabe zugrunde, ionendurchlässige Membranen, insbesondere lonentauschermembranen, bereitzustellen, die wie die aus der WO 2005/009596 bekannten Membranen eine profilierte Oberfläche aufweisen. In Membrananordnungen von Elektrodialysevorrichtungen sollen sie auch ohne separaten Spacer eingesetzt werden können. Die ionendurchlässigen Membranen sollen allerdings vergleichsweise einfacher und kostengünstiger herzustellen sein.

Diese Aufgabe wird gelöst durch das Verfahren zur Herstellung einer ionendurchlässigen Membran gemäß Anspruch 1 sowie durch eine ionendurchlässige Membran mit den Merkmalen gemäß Anspruch 7. Eine Membrananordnung mit mindestens einer erfindungsgemäßen ionendurchlässigen Membran sowie ein Elektrodialyseverfahren sind Gegenstand der Ansprüche 11 und 15. Bevorzugte Ausgestaltungen des erfindungsgemäßen Verfahrens, der erfindungsgemäßen ionendurchlässigen Membran und der erfindungsgemäßen Membrananordnung finden sich in den abhängigen Ansprüchen. Der Wortlaut sämtlicher Ansprüche wird hiermit durch Bezugnahme zum Inhalt dieser Beschreibung gemacht.

Ein erfindungsgemäßes Verfahren zur Herstellung einer ionendurchlässigen Membran, insbesondere einer lonentauschermembran, die mindestens eine profilierte Oberfläche aufweist, zeichnet sich dadurch aus, dass ein Formgebungselement unter Erzeugung eines vorzugsweise regelmäßigen Musters aus gleich oder verschieden ausgebildeten Erhebungen und/oder Vertiefungen mit einem nicht ausgehärteten, mindestens ein Polymer enthaltenden Polymerfilm in Kontakt gebracht wird, insbesondere auf diesen aufgedrückt wird.

Im Unterschied zu dem aus der WO 2005/009596 bekannten Vorgehen sind erfindungsgemäß keine "fertigen", ausgehärteten und somit im wesentlichen nur noch unter hohen Temperaturen plastisch verformbare Membranen Ausgangspunkt bei der Herstellung einer profilierten, ionendurchlässigen Membran. Das erfindungsgemäße Verfahren greift stattdessen auf nicht ausgehärtete Polymerfilme zurück, bei denen es sich insbesondere um bei der Herstellung von Membranen auftretende Zwischenprodukte handelt. In anderen Worten, zum Einsatz kommen im Rahmen des erfindungsgemäßen Verfahrens an Stelle von ausgehärteten Polymerfilmen Vorläufer für solche Polymerfilme, worunter vorliegend insbesondere alle ein- oder mehrkomponentigen Systeme verstanden werden sollen, aus denen Verbindungen mit polymerer Struktur herstellbar sind. Die einsetzbaren Vorläufer können sowohl reaktive Einzelmonomere als auch vorvernetzte Monomerkomponenten aufweisen. Die Membran wird erfindungsgemäß insbesondere bereits im Rahmen ihres Herstellungsprozesses profiliert (unter dem Begriff "Profilierung" soll im Rahmen dieser Anmeldung die Erzeugung des bereits erwähnten, vorzugsweise regelmäßigen Musters aus gleich oder verschieden ausgebildeten Erhebungen und/oder Vertiefungen auf dem nicht ausgehärteten, mindestens ein Polymer enthaltenden Polymerfilm verstanden werden). Eine aufwendige nachgeschaltete Bearbeitung der Membran entfällt.

Bevorzugt weist das erfindungsgemäße Verfahren mehrere Schritte auf. In einem Schritt wird der nicht ausgehärtete Polymerfilm auf einem Substrat bereitgestellt, in einem weiteren wird das Formgebungselement mit dem nicht ausgehärteten Polymerfilm in Kontakt gebracht und in einem dritten Schritt wird der Polymerfilm ausgehärtet und damit in eine gehärtete Polymerschicht überführt.

Die Vorteile dieser Vorgehensweise sind offensichtlich. Zum einen lässt sich ein nicht ausgehärteter Polymerfilm sehr viel leichter profilieren als ein ausgehärteter. Zum anderen kann das Profilieren bei Raumtemperatur erfolgen. Ein Heißpressen oder Heißprägen ist nicht erforderlich und erfindungsgemäß auch nicht bevorzugt. Entsprechend ist man bei der Materialauswahl für die Membran auch nicht mehr zwingend auf thermisch verformbare Polymere beschränkt.

Das Formgebungselement wird mit einem lösungsmittelhaltigen Polymerfilm in Kontakt gebracht, in dem das mindestens eine Polymer mindestens teilweise gelöst vorliegt. Als nicht ausgehärteter Polymerfilm kommt also ein lösungsmittelhaltiger Film zum Einsatz.

Der Anteil an Lösungsmittel in dem Film liegt dabei vorzugsweise zwischen 30 Gew.-% und 95 Gew.-%, insbesondere zwischen 50 Gew.-% und 90 Gew.-%.

Wie oben bereits angedeutet ist es auch möglich, dass als nicht ausgehärteter Polymerfilm ein Film zum Einsatz kommt, der zusätzlich zu dem Lösungsmittel mindestens eine vernetzbare Komponente wie beispielsweise einen Monomeranteil aufweist. Vorzugsweise handelt es sich bei der vernetzbaren Komponente um eine durch Strahlung und/oder thermisch vernetzbare Komponente.

Das Inkontaktbringen des Formgebungselement mit dem nicht ausgehärteten Polymerfilm erfolgt vorzugsweise durch Aufdrücken, insbesondere nur unter leichtem Druck. So kann das Formgebungselement auch nur auf den Polymerfilm aufgelegt werden, so dass es lediglich durch sein Eigengewicht auf den Polymerfilm gedrückt wird. In einer weiteren bevorzugten Ausführungsform wird es derart zum Polymerfilm angeordnet, dass es die Oberfläche des Polymerfilms nur leicht berührt.

Zur Bereitstellung des nicht ausgehärteten Polymerfilms wird dieser vorzugsweise in fließfähiger, gießförmiger und/oder sprühfähiger Form auf das Substrat aufgebracht. Das Aufbringen erfolgt in Abhängigkeit von der Konsistenz des Polymerfilms entsprechend vorzugsweise durch Gießen, Rakeln oder Sprühen. Als Formgebungselement wird ein netz- oder gitterartiges, flächiges Gebilde aus Filamenten auf den Polymerfilm aufgedrückt. Die Filamente sind dabei vorzugsweise überkreuzt angeordnet und bilden so maschenartige Durchlässe. Die Durchlässe sind vorzugsweise in Form eines Parallelogramms, insbesondere rautenförmig, besonders bevorzugt im wesentlichen quadratisch, ausgebildet. In gleicher Richtung ausgerichtete Filamente verlaufen vorzugsweise jeweils streng parallel zueinander und sind in vorzugsweise regelmäßigen Abständen voneinander angeordnet. Sich kreuzende Filamente schließen vorzugsweise einen Winkel zwischen 60° und 120°, insbesondere von ca. 90°, ein.

Die Filamente können einen runden und/oder einen eckigen Querschnitt aufweisen. Als Formgebungselemente sind Gebilde aus Filamenten einsetzbar, die sowohl Filamente mit rundem als auch mit eckigen Querschnitt aufweisen.

Die Filamente weisen vorzugsweise einen Durchmesser zwischen 0,3 mm und 2 mm, insbesondere zwischen 0,5 mm und 1,2 mm, besonders bevorzugt von ca. 0,8 mm, auf. Die Seitenlängen der parallelogrammartig ausgebildeten Durchlässe liegen vorzugsweise zwischen 1 mm und 10 mm, insbesondere zwischen 3 mm und 8 mm, besonders bevorzugt bei ca. 5 mm.

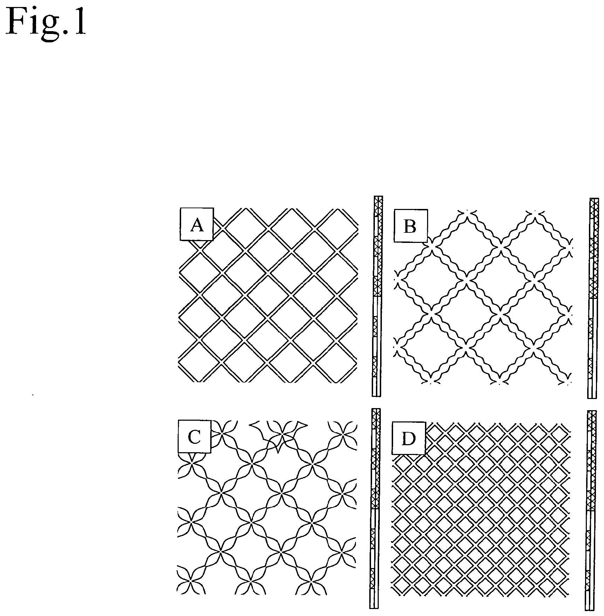

In besonders bevorzugten Ausführungsformen des erfindungsgemäßen Verfahrens werden als Formgebungselement kommerziell erhältliche Spacer verwendet. Geeignete Spacer sind beispielsweise von Balster et al. beschrieben worden (Journal of Membrane Science, 282, 2006, 351-361) und in Fig. 1 abgebildet. Wie anhand von Fig. 1 (Spacer A, B, C und E) zu erkennen ist, liegen die dargestellten Spacer in Form von netz- oder gitterartigen, flächigen Gebilden aus Filamenten vor, wie sie oben bereits beschrieben wurden.

Das Formgebungselement bleibt mit dem Polymerfilm in Kontakt, bis der Polymerfilm im wesentlichen vollständig ausgehärtet ist. Das Formgebungselement wird erst nach dem Aushärten vom ausgehärteten Polymerfilm abgelöst.

Es ist weiterhin bevorzugt, dass das Inkontaktbringen des Formgebungselements mit dem nicht ausgehärteten Polymerfilm bei Raumtemperatur erfolgt. Bei dem nicht ausgehärteten Polymerfilm handelt es sich entsprechend bevorzugt nicht etwa um eine Schmelze. Vorzugsweise wird weder dem Formgebungselement noch dem Polymerfilm beim oder vor dem Inkontaktbringen Wärme zugeführt.

Vorzugsweise wird der Polymerfilm ausgehärtet, indem im Polymerfilm enthaltenes Lösungsmittel entfernt wird. Dazu kann man im einfachsten Fall das Lösungsmittel einfach verdunsten lassen. Die Verdunstung lässt sich natürlich auch aktiv beschleunigen, beispielsweise durch Belüftung.

Darüber hinaus kann es bevorzugt sein, den Polymerfilm unter phaseninvertierenden Bedingungen auszuhärten. Dazu kann ein Polymerfilm, der ein Lösungsmittel aufweist, in dem das mindestens eine Polymer mindestens teilweise gelöst ist (ein organisches Lösungsmittel, beispielsweise N-Methyl-2-pyrrolidon), mit einem flüssigen Medium in Kontakt gebracht werden, in dem das mindestens eine Polymer im wesentlichen unlöslich ist (beispielsweise Wasser), das jedoch zumindest teilweise mit dem Lösungsmittel im Polymerfilm mischbar ist. An der Phasengrenze zwischen dem lösungsmittelhaltigen Polymerfilm und dem flüssigen Medium mischen sich Lösungsmittel und flüssiges Medium und das mindestens eine Polymer fällt aus. Im Inneren des Polymerfilms setzt dieser Prozess (das Ausfallen) nicht gleichzeitig ein, da das flüssige Medium erst mit einer gewissen Verzögerung in den Polymerfilm eindringen kann. Auf diese Weise lassen sich profilierte, ausgehärtete Polymerfilme erzeugen, die im Inneren eine größere Porosität aufweisen als an ihrer Oberfläche.

Weist der nicht ausgehärtete Polymerfilm mindestens eine vernetzbare Komponente auf, so ist es auch möglich, dass der Polymerfilm zum Aushärten bestrahlt wird, beispielsweise mit UV-Strahlung oder Elektronenstrahlung. Weist der Polymerfilm eine thermisch vernetzbare Komponente auf, so lässt sich der Film mittels Wärmezufuhr aushärten.

Es ist bevorzugt, dass der Polymerfilm zumindest im ausgehärteten Zustand ionenleitende, insbesondere protonenleitende Eigenschaften, aufweist. Grundsätzlich kann der Polymerfilm kationen- oder anionenleitende Eigenschaften aufweisen. In bevorzugten Ausführungsformen kann der Polymerfilm ionenleitende Zusätze aufweisen.

In einer besonders bevorzugten Ausführungsform des erfindungsgemäßen Verfahrens wird der nicht ausgehärtete Polymerfilm nicht auf einem beliebigen Substrat, sondern auf einer polymeren Trägerschicht bereitgestellt.

Vorzugsweise wird eine Trägerschicht verwendet, die mit dem nicht ausgehärteten Polymerfilm eine feste Bindung eingehen kann, so dass der Polymerfilm nach dem Aushärten zumindest nicht mehr zerstörungsfrei von der Trägerschicht abgelöst werden kann. Beispielsweise kann die polymere Trägerschicht so gewählt werden, dass sie von im Polymerfilm enthaltenem Lösungsmittel angelöst werden kann, so dass sich die Trägerschicht und der Polymerfilm derart miteinander verbinden, dass eine Grenzfläche zwischen den beiden nicht mehr bestimmbar ist.

Besonders bevorzugt wird eine Trägerschicht verwendet, deren stoffliche Zusammensetzung im wesentlichen der des Polymerfilms nach dem Aushärten entspricht. Auf die entsprechenden Ausführungen zur Zusammensetzung des Polymerfilms (s.o.) wird hiermit Bezug genommen.

Besonders bevorzugt kann auch ein bereits profilierter und ausgehärteter Polymerfilm als Trägerschicht verwendet werden. Ein weiterer Polymerfilm kann auf dessen nicht profilierter Seite aufgebracht werden. So lassen sich beidseitig profilierte Polymerschichten herstellen.

In besonders bevorzugten Ausführungsformen kann so eine Polymerschicht aus einem Anionentauschermaterial mit einer Polymerschicht aus einem Kationentauschermaterial kombiniert werden und dadurch eine bipolare Membran erhalten werden. So kann beispielsweise eine einseitig profilierte Polymerschicht aus einem Anionentauschermaterial nach dem erfindungsgemäßen Verfahren hergestellt werden, auf deren nicht profilierte Seite anschließend ein Polymerfilm aus einem Kationentauschermaterial aufgebracht, profiliert und ausgehärtet wird (oder umgekehrt).

Wie der Polymerfilm weist auch die Trägerschicht in bevorzugten Ausführungsformen ionenleitende, insbesondere protonenleitende, Eigenschaften auf.

In besonders bevorzugten Ausführungsformen weist ein erfindungsgemäßes Verfahren mindestens die folgenden Schritte auf:
(1) Aufbringen eines lösungsmittelhaltigen Polymerfilms, in dem mindestens ein Polymer mindestens teilweise gelöst vorliegt, auf eine polymere Trägerschicht,
(2) Inkontaktbringen eines Formgebungselements mit dem Polymerfilm unter Erzeugung eines vorzugsweise regelmäßigen Musters aus gleich oder verschieden ausgebildeten Erhebungen und/oder Vertiefungen und
(3) Entfernen von im Polymerfilm enthaltenem Lösungsmittel.

Das Formgebungselement wird vorzugsweise mit einem Polymerfilm in Kontakt gebracht, der eine Dicke zwischen 50 µm und 500 µm, vorzugsweise von ca. 300 µm, aufweist. Wird das Formgebungselement mit einem Polymerfilm in Kontakt gebracht, der nicht auf eine polymere Trägerschicht aufgebracht wurde, so ist es bevorzugt, dass die Dicke des Polymerfilms nicht unter 100 µm beträgt. Diese Angaben beziehen sich alle auf den noch nicht ausgehärteten, vorzugsweise lösungsmittelhaltigen Film. Die nach dem Aushärten entstandene Schicht ist in der Regel wesentlich dünner.

Die Dicke der polymeren Trägerschicht, auf die der nicht ausgehärtete Polymerfilm bereitgestellt wird, liegt vorzugsweise zwischen 10 µm und 300 µm, insbesondere bei ca. 100 µm. Diese Angaben beziehen sich auf eine ausgehärtete, vorzugsweise vollständig lösungsmittelfreie Schicht.

Als nicht ausgehärteter Polymerfilm wird gemäß dem erfindungsgemäßen Verfahren vorzugsweise ein Film verwendet, der eine Mischung aus zwei oder mehr Polymeren aufweist.

An dieser Stelle bietet es sich an, kurz auf den Begriff "Polymer" einzugehen. Der Begriff "Polymer" ist im Rahmen der vorliegenden Anmeldung dahingehend zu verstehen, dass er sowohl Polymere umfasst, die aus einer Art von Monomeren entstanden sind als auch solche, die aus zwei oder mehr Monomerarten gebildet wurden. Er umfasst also auch Copolymere.

Besonders bevorzugt weist der nicht ausgehärtete Polymerfilm ein sulfoniertes Polyetheretherketon (SPEEK) und/oder ein Polyethersulfon (PES) auf.

Weiterhin weist der nicht ausgehärtete Polymerfilm mindestens ein organisches Lösungsmittel, insbesondere N-Methyl-pyrrolidon (NMP), auf.

Das Formgebungselement wird mit einem Polymerfilm in Kontakt gebracht, der das mindestens eine Polymer in einem Anteil von zwischen 5 Gew.-% und 40 Gew.-%, vorzugsweise zwischen 10 Gew.% und 40 Gew.-%, insbesondere zwischen 10 Gew.-% und 30 Gew.-%, aufweist.

Gemäß dieser Ausführungsform des erfindungsgemäßen Verfahrens ist es besonders gut möglich, die Struktur eines geeigneten Formgebungselements auf dem Polymerfilm zu replizieren, so dass man nicht etwa eine inverse Struktur erhält (wie es insbesondere bei einem festen Aufdrücken in aller Regel der Fall ist), sondern im wesentlichen eine Kopie des sich auf dem Formgebungselement ausgebildeten Profils. Besonders geeignet sind hierfür die oben beschriebenen netz- oder gitterartigen, flächigen Gebilde aus Filamenten, insbesondere die oben beschriebenen kommerziellen Spacer. Wird ein solches Gebilde als Formgebungselement mit dem Polymerfilm in Kontakt gebracht, insbesondere derart, dass es die Oberfläche des Polymerfilms nur leicht berührt, so kann sich, vermutlich bedingt durch Kapillarkräfte, das mindestens eine Polymer an und/oder unter den Filamenten ansammeln. Spätestens wenn der Polymeranteil, beispielsweise bedingt durch Verdunstung des Lösungsmittels, 40 Gew.-% im Polymerfilm überschreitet, kommt dieser Prozeß aufgrund der ansteigenden Viskosität des Polymerfilms in der Regel zum Erliegen. Hält man die Fließfähigkeit des Polymerfilms über eine ausreichend lange Zeit aufrecht, so erhält man die erwähnte Kopie des Formgebungselements.

Wie eingangs bereits erwähnt wurde, umfasst die vorliegende Erfindung auch ionendurchlässige Membranen, insbesondere lonentauschermembranen, mit profilierter Oberfläche, insbesondere ionenleitende Membranen, die nach einem erfindungsgemäßen Verfahren hergestellt oder herstellbar ist.

Eine erfindungsgemäße ionendurchlässige Membran zeichnet sich dadurch aus, dass sie eine Polymerschicht mit einem vorzugsweise regelmäßigen Muster aus gleich oder verschieden ausgebildeten Erhebungen und/oder Vertiefungen aufweist.

Vorzugsweise weist eine ionendurchlässige Membran nach der vorliegenden Erfindung eine polymere Trägerschicht auf, auf der die Polymerschicht mit dem vorzugsweise regelmäßigen Muster aus gleich oder verschieden ausgebildeten Erhebungen und/oder Vertiefungen angeordnet ist.

In einer weiteren bevorzugten Ausführungsform kann die erfindungsgemäße ionendurchlässige Membran auch zwei miteinander verbundene Polymerschichten aufweisen, die jeweils auf der voneinander abgewandten Seite ein vorzugsweise regelmäßiges Muster aus gleich oder verschieden ausgebildeten Erhebungen und/oder Vertiefungen aufweisen. Die zwei Polymerschichten sind gegebenenfalls über eine Trägerschicht miteinander verbunden, die zwischen den zwei Polymerschichten angeordnet ist.

In bevorzugten Ausführungsformen können sich die Muster auf den beiden Seiten voneinander unterscheiden.

In bevorzugten Ausführungsformen weist eine erfindungsgemäße ionendurchlässige Membran eine Polymerschicht aus einem Kationentauschermaterial und eine zweite aus einem Anionentauschermaterial auf. In diesen Fällen hat die erfindungsgemäße ionendurchlässige Membran bipolare Eigenschaften.

Erfindungsgemäß besonders bevorzugt können auch ionendurchlässige Membranen mit einer Polymerschicht sein, die beidseitig ein vorzugsweise regelmäßiges Muster aus gleich oder verschieden ausgebildeten Erhebungen und/oder Vertiefungen aufweist.

Die profilierte Polymerschicht in einer erfindungsgemäßen ionendurchlässigen Membran entspricht vorzugsweise in allen ihren Eigenschaften, insbesondere in ihrer Zusammensetzung, der Polymerschicht, die durch Aushärten des nicht ausgehärteten Polymerfilms in einem erfindungsgemäßen Verfahren erhalten wird, das vorstehend bereits beschrieben wurde. Auf die entsprechenden Ausführungen wird hiermit ausdrücklich Bezug genommen und verwiesen.

Vorzugsweise weist die Polymerschicht in einer erfindungsgemäßen lonentauschermembran eine Dicke zwischen 10 µm und 300 µm, insbesondere von ca. 100 µm, auf.

Die polymere Trägerschicht in einer erfindungsgemäßen ionendurchlässigen Membran ist in ihren Eigenschaften mit der im Rahmen des erfindungsgemäßen Verfahrens dargestellten polymeren Trägerschicht vorzugsweise identisch. Auch im Hinblick auf die bevorzugten Merkmale der polymeren Trägerschicht wird entsprechend auf vorstehende Beschreibungsteile Bezug genommen und verwiesen.

Vorzugsweise ist die Polymerschicht fest mit der Trägerschicht verbunden, insbesondere so fest, dass sie zumindest nicht mehr zerstörungsfrei von dem Trägerfilm abgelöst werden kann. Letzteres gilt insbesondere dann, wenn die Polymerschicht und die Trägerschicht die gleiche stoffliche Beschaffenheit aufweisen. Insbesondere in diesem Fall kann es bevorzugt sein, dass sich eine Grenzfläche zwischen der Trägerschicht und der Polymerschicht nicht mehr bestimmen lässt und die Polymerschicht und die Trägerschicht einen einstückigen Verbund ausbilden. Gleiches gilt auch für die bevorzugten Ausführungsformen einer erfindungsgemäßen ionendurchlässigen Membran, in der diese zwei miteinander verbundene Polymerschichten aufweist, die jeweils auf der voneinander abgewandten Seite ein vorzugsweise regelmäßiges Muster aus gleich oder verschieden ausgebildeten Erhebungen und/oder Vertiefungen aufweisen.

Besonders bevorzugt ist eine erfindungsgemäße ionendurchlässige Membran, wenn sie eine Polymerschicht aufweist, die ein regelmäßiges Muster aus gleich ausgebildeten Erhebungen und Vertiefungen aufweist.

In einer weiteren bevorzugten Ausführungsform einer erfindungsgemäßen ionendurchlässigen Membran ist es möglich, dass diese eine Polymerschicht aufweist, die nur Vertiefungen aufweist, die ein regelmäßiges Muster bilden.

In einer weiteren bevorzugten Ausführungsform einer erfindungsgemäßen ionendurchlässigen Membran ist es möglich, dass diese eine Polymerschicht aufweist, die nur Erhebungen aufweist, die ein regelmäßiges Muster bilden.

Die Vertiefungen bilden ein netz- oder gitterartiges Muster aus. Die Vertiefungen können bevorzugt kanalartig ausgebildet sein. Sich kreuzende Vertiefungen schließen vorzugsweise einen Winkel zwischen 60° und 120°, insbesondere von ca. 90°, ein.

Die Vertiefungen weisen vorzugsweise eine Breite zwischen 0,3 mm und 2 mm, insbesondere zwischen 0,5 mm und 1,2 mm, besonders bevorzugt von ca. 0,8 mm, auf.

Vorzugsweise können zwischen den Vertiefungen Erhebungen ausgebildet sein, vorzugsweise mit rautenförmigem, insbesondere mit im wesentlichen quadratischem, Umriss.

Die Erhebungen weisen vorzugsweise Seitenlängen zwischen 1 mm und 10 mm, insbesondere zwischen 3 mm und 8 mm, besonders bevorzugt von ca. 5 mm, auf.

Die Höhe der Erhebungen (ausgehend vom tiefsten Punkt auf der Membranoberfläche) beträgt insbesondere zwischen 0,005 mm und 5 mm.

Die Tiefe der Vertiefungen (ausgehend vom höchsten Punkt auf der Membranoberfläche) beträgt insbesondere zwischen 0,005 mm und 5 mm.

Die Erhebungen weisen Ränder auf, die höher ausgebildet sind als das Zentrum der Erhebungen. Zwischen den Rändern der Erhebungen kann eine Vertiefung, insbesondere eine senkenartige Vertiefung, mit vorzugsweise im wesentlichen rautenförmigem, insbesondere im wesentlichen quadratischem Umriss, ausgebildet sein.

Die Erhebungen bilden ein netz- oder gitterartiges Muster aus. Eine ionendurchlässige Membran mit solchen Eigenschaften ist insbesondere gemäß der oben beschriebenen, besonders bevorzugten Ausführungsform des erfindungsgemäßen Verfahrens, bei der das Formgebungselement mit einem Polymerfilm in Kontakt gebracht wird, der das mindestens eine Polymer in einem Anteil von 10 Gew.% bis 40 Gew.-%, aufweist, herstellbar.

Sich kreuzende Erhebungen schließen insbesondere einen Winkel zwischen 60° und 120°, insbesondere von ca. 90° ein.

Bevorzugt sind zwischen den Erhebungen Vertiefungen ausgebildet, die insbesondere einen rautenförmigen, besonders bevorzugt einen im wesentlichen quadratischen, Umriss aufweisen.

Die Erhebungen weisen insbesondere eine Breite zwischen 0,3 mm und 2 mm, insbesondere zwischen 0,5 mm und 1,2 mm, besonders bevorzugt von ca. 0,8 mm, auf.

Die Vertiefungen weisen insbesondere Seitenlängen zwischen 1 mm und 10 mm, insbesondere zwischen 3 mm und 8 mm, besonders bevorzugt von ca. 5 mm, ein.

Die Höhe der Erhebungen beträgt (ausgehend vom tiefsten Punkt auf der Membranoberfläche) vorzugsweise zwischen 0,005 mm und 5 mm.

In gleicher Richtung ausgebildete Vertiefungen und Erhebungen verlaufen erfindungsgemäß vorzugsweise jeweils streng parallel zueinander und sind in vorzugsweise regelmäßigen Abständen voneinander angeordnet.

Insbesondere bei der Herstellung von ionendurchlässigen Membranen mit zwei miteinander verbundenen Polymerschichten, die jeweils auf der voneinander abgewandten Seite ein vorzugsweise regelmäßiges Muster aus gleich oder verschieden ausgebildeten Erhebungen und/oder Vertiefungen aufweisen und von ionendurchlässigen Membranen mit einer Polymerschicht, die beidseitig ein vorzugsweise regelmäßiges Muster aus gleich oder verschieden ausgebildeten Erhebungen und/oder Vertiefungen aufweist, zeigen sich die Vorteile des erfindungsgemäßen Verfahrens sehr deutlich.

Erfindungsgemäß sind ionendurchlässige Membranen mit
- einem Verbund aus zwei miteinander verbundenen Polymerschichten (1), die jeweils auf der voneinander abgewandten Seite ein vorzugsweise regelmäßiges Muster aus gleich oder verschieden ausgebildeten Erhebungen und/oder Vertiefungen aufweisen, sowie
- lonentauschermembranen mit einer Polymerschicht (2), die beidseitig ein vorzugsweise regelmäßiges Muster aus gleich oder verschieden ausgebildeten Erhebungen und/oder Vertiefungen aufweist,
herstellbar, indem man in einem ersten Schritt ein Formgebungselement mit einem ersten Polymerfilm in Kontakt bringt und den ersten Polymerfilm dann aushärtet. In einem zweiten Schritt verwendet man den ausgehärteten Polymerfilm als Trägerschicht und trägt auf dessen nicht profilierter Seite einen zweiten Polymerfilm auf, der anschließend wieder profiliert und ausgehärtet wird. Verwendet man für beide Polymerfilme jeweils identisches Material, so ist, wie bereits erwähnt, in bevorzugten Ausführungsformen eine Grenzfläche zwischen den zwei profilierten Polymerschichten im entstehenden Verbund nicht mehr erkennbar (man erhält also eine ionendurchlässige Membran mit einer Polymerschicht (2)). Ansonsten erhält man eine ionendurchlässige Membran mit einem Verbund aus zwei miteinander verbundenen Polymerschichten (1).

Durch analoges Vorgehen mit einem ersten, sich auf einer polymeren Trägerschicht befindlichen Polymerfilm, bei dem dann auf die Rückseite der Trägerschicht der zweite Polymerfilm aufgebracht wird, erhält man ionendurchlässige Membranen mit zwei über die Trägerschicht miteinander verbundenen Polymerschichten, die jeweils auf der voneinander abgewandten Seite ein vorzugsweise regelmäßiges Muster aus gleich oder verschieden ausgebildeten Erhebungen und/oder Vertiefungen aufweisen.

Ein solches Vorgehen ist mit dem aus dem Stand der Technik bekannten Heißpressen von Membranen in der Regel nicht möglich, da das (nachträgliche) heiße Aufpressen eines zweiten Musters auf die Rückseite einer bereits mit einem ersten Muster versehenen Membran das zuerst aufgebrachte Profil zerstören oder zumindest stark beschädigen würde. Auch lassen sich Membranen mit einem Muster auf beiden Seiten herstellen, wobei sich die Muster voneinander unterscheiden.

Weiterhin ist auch eine Membrananordnung Gegenstand der vorliegenden Erfindung. Sie umfasst mindestens eine erfindungsgemäße ionendurchlässige Membran, wie sie unmittelbar vorstehend beschrieben ist, weshalb auch hier auf die entsprechenden Ausführungen Bezug genommen werden kann.

In besonders bevorzugten Ausführungsformen ist eine erfindungsgemäße Membrananordnung und/oder Membran Bestandteil einer Dialysevorrichtung, insbesondere einer Elektrodialysevorrichtung.

Erfindungsgemäße Membrananordnungen zur elektrodialytischen Entsalzung weisen in der Regel jeweils mindestens ein Diluat- und ein Konzentratkammer auf.

In bevorzugten Ausführungsformen umfasst die erfindungsgemäße Membrananordnung mindestens zwei lonentauschermembranen.

In einer Weiterbildung einer erfindungsgemäßen Membrananordnung ist es bevorzugt, dass sie mindestens zwei ionendurchlässige Membranen aufweist, zwischen denen ein separater Spacer angeordnet ist. Eine solche Anordnung hat sich insbesondere unter hydrodynamischen Gesichtspunkten in der Praxis als sehr vorteilhaft erwiesen.

Als separate Spacer lassen sich grundsätzlich alle bekannten Spacer für Elektrodialysevorrichtungen verwenden, insbesondere auch solche, die sich erfindungsgemäß als Formgebungselement einsetzen lassen und oben bereits beschrieben wurden.

Erfindungsgemäße ionendurchlässige Membranen eignen sich nicht nur für Dialyseverfahren und Prozesse, sie können insbesondere auch in Brennstoffzellen, Redox-Flow-Zellen und Elektrolysevorrichtungen eingesetzt werden. Auch die Umkehr-Elektrodialyse (reversed electrodialysis) zur Stromerzeugung ist ein potentielles Anwendungsgebiet für erfindungsgemäße ionendurchlässige Membranen.

Entsprechend ist eine erfindungsgemäße Membrananordnung und/oder Membran in einer bevorzugten Ausführungsform Bestandteil einer Brennstoffzelle.

In einer weiteren bevorzugten Ausführungsform kann eine erfindungsgemäße Membrananordnung und/oder Membran Bestandteil einer Redox-Flow-Zelle sein.

Ebenfalls kann es bevorzugt sein, dass eine erfindungsgemäße Membrananordnung und/oder Membran Bestandteil einer Elektrolysevorrichtung ist.

Ebenfalls von der vorliegenden Erfindung umfasst ist ein Verfahren zur elektrodialytischen Entsalzung von Flüssigkeiten, wobei mindestens eine erfindungsgemäße Membrananordnung verwendet wird. Auf die vorstehende Beschreibung der erfindungsgemäßen Membrananordnung wird hiermit Bezug genommen und verwiesen.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

In den Figuren zeigen
- **Fig. 1**: aus dem Stand der Technik bekannte, als Formgebungselemente geeignete Spacer. Die Spacer sind von Balster et al. beschrieben worden (Journal of Membrane Science, 282, 2006, 351-361). Die Spacer A, B, C und E liegen in Form von netzartigen, flächigen Gebilden aus Filamenten vor.
- **Fig. 2**: ein Photo der Polymerschicht einer bevorzugten Ausführungsform einer gemäß der vorliegenden Erfindung hergestellten lonentauschermembran (unten) sowie eine vergrößerte Darstellung eines Teilbereichs (oben).
- **Fig. 3**: illustriert den Verlauf der Grenzstromdichte in Abhängigkeit vom Durchfluss bei einem Elektrodialsyevorgang, jeweils bestimmt für eine Membrananordnung mit einer erfindungsgemäßen lonentauschermembran (oben) und einer nicht profilierten Standardmembran (unten).
- **Fig. 4**: zeigt schematisch die Vorgehensweise bei einer besonders bevorzugten Ausführungsform des erfindungsgemäßen Verfahrens.

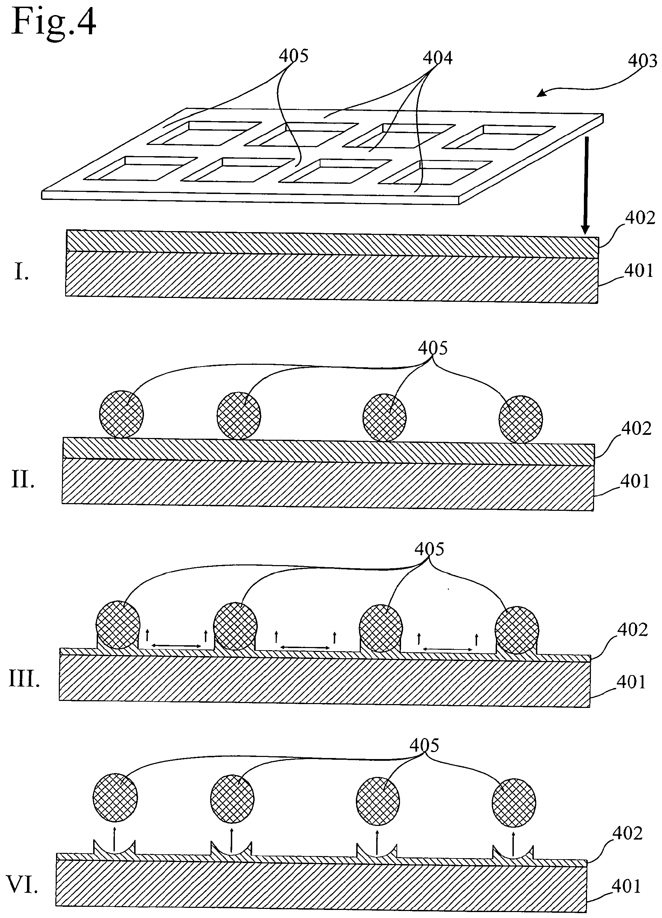

Fig. 4 zeigt schematisch die Vorgehensweise bei einer besonders bevorzugten Ausführungsform des erfindungsgemäßen Verfahrens. Auf einem Substrat 401 (im Beispiel unten der erste Polymerfilm) wird ein nicht ausgehärteter Polymerfilm 402 (im Beispiel unten der zweite Polymerfilm) enthaltend mindestens ein Polymer bereitgestellt. Ein flächiges, netz- oder gitterartiges Gebilde 403 mit Filamenten wie sie oben beschrieben wurden, vorliegend mit den Längsfilamenten 404 und den Querfilamenten 405, wird in I. mit dem Polymerfilm 402 in Kontakt gebracht und zwar derart, dass sich unter den Filamenten das mindestens eine Polymer ansammeln kann (II. zeigt im Querschnitt derart mit dem Polymerfilm 402 in Kontakt gebrachte Querfilamente 405). Anschließend wird im Polymerfilm enthaltenes Lösungsmittel entfernt, beispielsweise indem man es verdunsten lässt. Dabei sammelt sich das mindestens eine Polymer unter den Filamenten 405 an (siehe III., ebenfalls Querschnittsdarstellung). Nach dem Entfernen des Lösungsmittels wird der Spacer bzw. das netz- oder gitterartige Gebilde 403 entfernt, die resultierende Erhebung auf dem Substrat ist in IV. (Querschnittsdarstellung) dargestellt. Auf dem Substrat lässt sich so mit besonderem Vorteil ein Positivabbild des verwendeten Gebildes 403 erzeugen.

### Beispiel

### Herstellung einer lonentauschermembran

Als Lösungsmittel wurde N-Methyl-2-pyrrolidon vorgelegt. Darin wurden unter Rühren SPEEK und PES in einem Gewichtsverhältnis von 6 : 4 mindestens teilweise gelöst. Die entstandene Polymerlösung wies einen Polymeranteil von 20 Gew.-% auf.

Aus der Polymerlösung wurde ein erster Polymerfilm mit einer Dicke von 500 µm (bezogen auf den lösungsmittelhaltigen Film) gegossen. Der Film wurde getrocknet, bis das im Film enthaltene Lösungsmittel im wesentlichen vollständig entfernt war. Der entstandene ausgehärtete Film wies eine Dicke von ca. 100 µm auf.

Auf den getrockneten, nun als Träger fungierenden ersten Film wurde unter Verwendung der oben beschriebenen Polymerlösung ein zweiter Polymerfilm in einer Dicke von 300 µm (wiederum bezogen auf den lösungsmittelhaltigen Film) gegossen. Auf den zweiten Film wurde ein flächiger, netzartig ausgebildeter Spacer aus gekreuzt angeordneten Filamenten, die im wesentlichen quadratische Durchlässe einfassen, (beschrieben im Journal of Membrane Science, 282, 2006, 351-361 als "Spacer H") leicht aufgedrückt. Die Filamente wiesen einen Durchmesser von ca. 0,8 mm auf. Der Film wurde getrocknet und anschließend mitsamt dem Spacer, der während des Trocknungsvorgangs durchgehend aufgedrückt worden war, in ein Wasserbad überführt. Dort wurde der Film vom Spacer abgezogen.

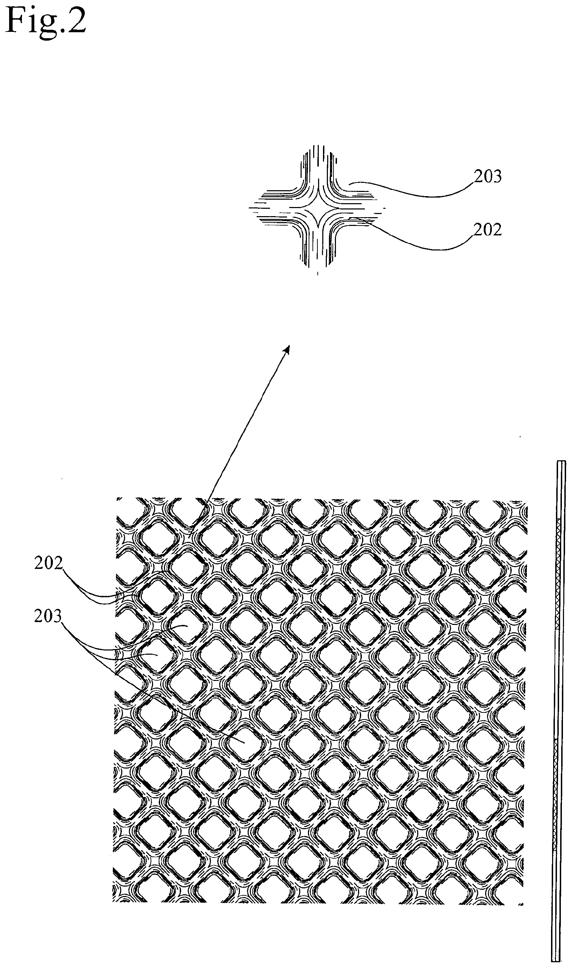

Die resultierende lonentauschermembran wies eine Trägerschicht und eine darauf aufgebrachte, mit der Trägerschicht fest verbundene, profilierte Polymerschicht mit einem regelmäßigen Muster aus gleich ausgebildeten Erhebungen und Vertiefungen auf. Die profilierte Seite der Polymerschicht ist in Fig. 2 dargestellt.

Zu erkennen sind in Fig. 2 eine Vielzahl von im wesentlichen identisch ausgebildeten Erhebungen 201. Die Erhebungen weisen im wesentlichen quadratische Umrisse auf, diese wurden bei einigen Erhebungen zwecks verbesserter Darstellung mit schwarzem Stift nachgezogen. Die Erhebungen 201 sind parallel zueinander in Reihen angeordnet. Alle Erhebungen 201 sind voneinander durch kanalartig ausgebildete, sich überschneidende, rillenartige Vertiefungen 200 getrennt, die ein regelmäßiges netz- oder gitterartiges Muster mit im wesentlichen quadratischen Zwischenräumen (den Erhebungen 201) ausbilden und so die Umrisse der Erhebungen 201 definieren. In der gleichen Richtung angeordnete Vertiefungen 200 verlaufen dabei parallel zueinander und sind in regelmäßigen Abständen zueinander angeordnet.

Die Vertiefungen 200 bilden die Geometrie und die Maße der Filamente des verwendeten Spacers annähernd exakt ab, was auch so erwartet werden konnte. Überraschenderweise ist in Fig. 2 jedoch klar zu erkennen, dass innerhalb der Erhebungen 201 senkenartige Vertiefungen 203 ausgebildet sind. Die senkenartigen Vertiefungen 203 sind ebenfalls im wesentlichen quadratisch ausgebildet.

Im Querschnitt dargestellt weisen die Erhebungen 201 damit ihre höchsten Punkte im Bereich ihrer seitlichen Begrenzungen 202 auf. Rechts und links von den seitlichen Begrenzungen 202 (die mit schwarzem Stift nachgezogenen Umrisse der Erhebungen 201) einer Erhebung 201 befindet sich jeweils eine der rillenartigen Vertiefungen 200. Zwischen den seitlichen Begrenzungen 202 befindet sich die senkenartige Vertiefung 203, die ihren tiefsten Punkt im Zentrum der Erhebung 201 hat. Die senkenartige Vertiefung 203 ist vorzugsweise flacher ausgebildet als die rillenartigen Vertiefungen 200.

Die rillenartigen Vertiefungen 200 lassen sich insbesondere in der vergrößerten Darstellung in Fig. 2 gut erkennen. Sie verlaufen mittig durch das Bild von unten nach oben bzw. von links nach rechts. In der linken oberen und unteren Bildecke sowie rechts oben und unten ist jeweils eine Erhebung 201 mit im wesentlichen quadratischen Umriss ausschnittweise zu erkennen. Insbesondere bei den Erhebungen links unten und rechts oben zeichnet sich scharf die Kontur der seitlichen Begrenzungen 202 der Erhebungen ab, die jeweils deren höchste Punkte bilden (zwecks verbesserter Darstellung mit schwarzem Stift nachgezogen).

Die Ausbildung einer solchen Struktur ist vermutlich, wie oben bereits erwähnt, auf Kapillarkräfte zurückzuführen. Die zur Herstellung der Membran verwendete Polymerlösung wies einen Polymeranteil von 20 Gew.-% auf. Das mindestens eine Polymer konnte sich an und/oder unter den Filamenten anlagern bzw. sammeln, wodurch sich die Ränder bzw. seitlichen Begrenzungen 202 der Erhebungen 201 ausbildeten. Zwischen den sich bildenden Rändern sank gleichzeitig der Polymeranteil, wodurch es zur Ausbildung der erwähnten senkenartigen Vertiefung 203 kam.

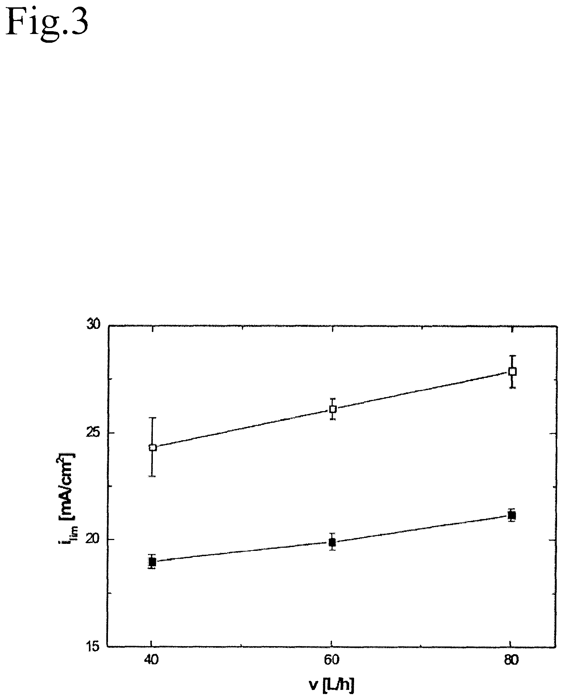

Eine gemäß obiger Vorschrift hergestellte Membran wurde in einer erfindungsgemäßen Membrananordnung verbaut, mit der anschließend Testmessungen unter Bedingungen durchgeführt wurden, wie sie von Balster et al. im Journal of Membrane Science 282 (2006), 351-361 beschrieben wurden. In Fig. 3 sind einige Ergebnisse dieser Messungen dargestellt (obere Kurve). Dargestellt ist der Verlauf der Grenzstromdichte in Abhängigkeit vom Durchfluss. Zum Vergleich finden sich in der unteren Kurve die Ergebnisse für eine Membrananordnung, die sich von der erfindungsgemäßen nur dadurch unterschied, dass in ihr eine nicht profilierte Standardmembran verbaut worden war. Die Meßbedingungen waren identisch.

## Patentansprüche

1. Verfahren zur Herstellung einer ionendurchlässigen Membran, insbesondere einer lonentauschermembran, die mindestens eine profilierte Oberfläche aufweist, wobei ein Formgebungselement unter Erzeugung eines vorzugsweise regelmäßigen Musters aus gleich oder verschieden ausgebildeten Erhebungen und/oder Vertiefungen mit einem nicht ausgehärteten, mindestens ein Polymer enthaltenden Polymerfilm in Kontakt gebracht wird, das Formgebungselement mit dem Polymerfilm in Kontakt bleibt, bis der Polymerfilm im Wesentlichen vollständig ausgehärtet ist und das Formgebungselement erst nach dem Aushärten vom ausgehärteten Polymerfilm abgelöst wird, **dadurch gekennzeichnet, dass** als Formgebungselement ein netz- oder gitterartiges, flächiges Gebilde aus Filamenten mit dem nicht ausgehärteten Polymerfilm in Kontakt gebracht wird und der nicht ausgehärtete Polymerfilm mindestens ein organisches Lösungsmittel und das mindestens eine Polymer in einem Anteil zwischen 5 Gew.-% und 40 Gew.-% aufweist.

2. Verfahren nach Anspruch 1, wobei
- der nicht ausgehärtete Polymerfilm auf einem Substrat bereitgestellt wird,
- das netz- oder gitterartige, flächige Gebilde mit dem Polymerfilm in Kontakt gebracht wird und
- der Polymerfilm ausgehärtet wird.

3. Verfahren nach Anspruch 2, **dadurch gekennzeichnet, dass** der nicht ausgehärtete Polymerfilm auf einer polymeren Trägerschicht bereitgestellt wird, wobei vorzugsweise eine Trägerschicht verwendet wird, deren Zusammensetzung im wesentlichen der des ausgehärteten Polymerfilms entspricht.

4. Verfahren nach einem der vorhergehenden Ansprüche, umfassend die Schritte
- Aufbringen eines lösungsmittelhaltigen Polymerfilms, in dem mindestens ein Polymer mindestens teilweise gelöst vorliegt, auf eine polymere Trägerschicht,
- Inkontaktbringen eines netz- oder gitterartigen, flächigen Gebildes aus Filamenten mit dem Polymerfilm unter Erzeugung eines vorzugsweise regelmäßigen Musters aus gleich oder verschieden ausgebildeten Erhebungen und/oder Vertiefungen und
- Entfernen von im Polymerfilm enthaltenem Lösungsmittel.

5. Verfahren nach einem der vorhergehenden Ansprüche, **dadurch gekennzeichnet, dass** der Polymerfilm ein sulfoniertes Polyetheretherketon (SPEEK) und/oder ein Polyethersulfon (PES) aufweist.

6. Verfahren nach einem der vorhergehenden Ansprüche, **dadurch gekennzeichnet, dass** das netz- oder gitterartige, flächige Gebilde mit einem Polymerfilm in Kontakt gebracht wird, der das mindestens eine Polymer in einem Anteil zwischen 10 Gew.-% und 40 Gew.-%, insbesondere 10 Gew.-% und 30 Gew.-%, aufweist.

7. Ionendurchlässige Membran, insbesondere lonentauschermembran, mit profilierter Oberfläche, hergestellt oder herstellbar nach einem Verfahren gemäß einem der vorhergehenden Ansprüche, **dadurch gekennzeichnet, dass** sie eine Polymerschicht mit einem vorzugsweise regelmäßigen Muster aus gleich oder verschieden ausgebildeten Erhebungen und/oder Vertiefungen aufweist, wobei die Erhebungen Ränder aufweisen, die höher ausgebildet sind als das Zentrum der Erhebungen.

8. Membran nach Anspruch 7, **dadurch gekennzeichnet, dass** sie eine Trägerschicht aufweist, auf der die Polymerschicht mit dem vorzugsweise regelmäßigen Muster aus gleich oder verschieden ausgebildeten Erhebungen und/oder Vertiefungen angeordnet ist.

9. Membran mit profilierter Oberfläche nach Anspruch 7 oder 8, **dadurch gekennzeichnet, dass** sie zwei miteinander verbundene Polymerschichten aufweist, die jeweils auf der voneinander abgewandten Seite ein vorzugsweise regelmäßiges Muster aus gleich oder verschieden ausgebildeten Erhebungen und/oder Vertiefungen aufweisen, wobei vorzugsweise die zwei Polymerschichten über eine Trägerschicht miteinander verbunden sind, die zwischen den zwei Polymerschichten angeordnet ist, und vorzugsweise eine der Polymerschichten aus einem Kationentauschermaterial und die andere aus einem Anionentauschermaterial gefertigt ist.

10. Membran nach einem der Ansprüche 7 bis 9, **dadurch gekennzeichnet, dass** die Polymerschicht eine Dicke zwischen 10 µm und 300 µm, insbesondere von ca. 100 µm, aufweist.

11. Membrananordnung, umfassend mindestens eine ionendurchlässige Membran gemäß einem der Ansprüche 7 bis 10.

12. Membrananordnung nach Anspruch 11, **dadurch gekennzeichnet, dass** sie Bestandteil einer Dialysevorrichtung, insbesondere einer Elektrodialysevorrichtung, ist.

13. Membrananordnung nach Anspruch 11 oder 12, umfassend mindestens zwei ionendurchlässige Membranen gemäß einem der Ansprüche 7 bis 10, **dadurch gekennzeichnet, dass** zwischen den Membranen ein separater Spacer angeordnet ist.

14. Membrananordnung nach Anspruch 11, **dadurch gekennzeichnet, dass** sie Bestandteil einer Brennstoffzelle, einer Redox-Flow-Zelle oder einer Elektrolysevorrichtung ist.

15. Verfahren zur elektrodialytischen Entsalzung von Flüssigkeiten, wobei mindestens eine Membrananordnung gemäß einem der Ansprüche 11 oder 12 verwendet wird.

## Claims

1. Method for production of an ion-permeable membrane, in particular an ion-exchange membrane, which has at least one profiled surface, wherein a shaping element is brought into contact with an uncured polymer film which contains at least one polymer, generating a preferably regular pattern of identically or differently structured elevations and/or recesses, the shaping element remains in contact with the polymer film until the polymer film is essentially completely cured, and the shaping element is removed not earlier than upon completion of the curing from the cured polymer film, **characterized in that** as shaping element, a net-like or grid-like, flat structure made of filaments is brought into contact with the uncured polymer film and the uncured polymer film includes at least one organic solvent and the at least one polymer in a fraction of between 5% by weight and 40% by weight.

2. Method according to claim 1, wherein
- the uncured polymer film is provided on a substrate,
- the net-like or grid-like, flat structure is brought into contact with the polymer film, and
- the polymer film is cured.

3. Method according to claim 2, **characterized in that** the uncured polymer film is provided on a polymeric support layer, wherein preferably a support layer is used, the composition of which essentially corresponds to that of the cured polymer film.

4. Method according to any of the preceding claims, comprising the steps
- applying a solvent-containing polymer film, in which at least one polymer is present at least in part in dissolved form, to a polymeric support layer,
- contacting a net-like or grid-like, flat structure made of filaments with the polymer film, generating a preferably regular pattern of identically or differently structured elevations and/or recesses, and
- removing of solvent present in the polymer film.

5. Method according to any of the preceding claims, **characterized in that** the polymer film comprises a sulfonated polyether ether ketone (SPEEK) and/or a polyether sulfone (PES).

6. Method according to any of the preceding claims, **characterized in that** the net-like or grid-like, flat structure is brought into contact with a polymer film which comprises the at least one polymer in a fraction of between 10% by weight and 40% by weight, in particular between 10% by weight and 30% by weight.

7. Ion-permeable membrane, in particular an ion-exchange membrane, having a profiled surface, produced or producible by a method according to any one of the preceding claims, **characterized in that** it includes a polymer layer having a preferably regular pattern of identically or differently structured elevations and/or recesses, wherein the elevations have edges which are constructed to be higher than the center of the elevations.

8. Membrane according to claim 7, **characterized in that** it comprises a support layer on which the polymer layer having the preferably regular pattern of identically or differently structured elevations and/or recesses is arranged.

9. Membrane having a profiled surface according to claim 7 or 8, **characterized in that** it comprises two polymer layers which are joined to one another, each of which, on the side facing away from the other, comprises a preferably regular pattern of identically or differently structured elevations and/or recesses, wherein preferably the two polymer layers are joined to one another via a support layer which is arranged between the two polymer layers, and preferably one of the polymer layers is made of a cation-exchange material and the other is made of an anion-exchange material.

10. Membrane according to any of claims 7 to 9, **characterized in that** the polymer layer has a thickness between 10 µm and 300 µm, in particular of approximately 100 µm.

11. Membrane arrangement, comprising at least one ion-permeable membrane according to any of claims 7 to 10.

12. Membrane arrangement according to claim 11, **characterized in that** it is a component of a dialysis device, in particular of an electrodialysis device.

13. Membrane arrangement according to claim 11 or 12, comprising at least two ion-permeable membranes according to any of claims 7 to 10, **characterized in that** a separate spacer is arranged between the membranes.

14. Membrane arrangement according to claim 11, **characterized in that** it is a component of a fuel cell, a redox flow cell, or an electrolysis device.

15. Method for the electrodialytic desalting of liquids, wherein at least one membrane arrangement according to any of claims 11 or 12 is used.

## Revendications

1. Procédé de fabrication d'une membrane perméable aux ions, en particulier une membrane échangeuse d'ions, qui présente au moins une surface profilée, dans lequel on met en contact un élément de formage avec un film polymère non durci, contenant au moins un polymère avec production d'un motif de préférence régulier composé de surélévations et/ou de dépressions de forme identique ou différente, l'élément de formage reste en contact avec le film polymère jusqu'à ce que le film polymère soit essentiellement entièrement durci et on ne détache l'élément de formage du film polymère durci qu'après le durcissement, **caractérisé en ce qu'**en guise d'élément de formage on met en contact avec le film polymère non durci un objet plat, en forme de filet ou de grille, composé de filaments, et le film polymère non durci présente au moins un solvant organique et ledit au moins un polymère en une proportion comprise entre 5 % en poids et 40 % en poids.

2. Procédé selon la revendication 1, dans lequel
- on prépare le film polymère non durci sur un substrat,
- on met l'objet plat en forme de filet ou de grille en contact avec le film polymère, et
- on durcit le film polymère.

3. Procédé selon la revendication 2, **caractérisé en ce que** l'on prépare le film polymère non durci sur une couche de support polymère, dans lequel on utilise de préférence une couche de support, dont la composition correspond essentiellement à celle du film polymère durci.

4. Procédé selon l'une quelconque des revendications précédentes, comprenant les étapes suivantes:
- dépôt d'un film polymère contenant un solvant, dans lequel au moins un polymère se trouve sous forme au moins partiellement dissoute, sur une couche de support polymère,
- mise en contact d'un objet plat, en forme de filet ou de grille, composé de filaments avec le film polymère avec production d'un motif de préférence régulier composé de surélévations et/ou de dépressions de forme identique ou différente, et
- élimination du solvant contenu dans le film polymère.

5. Procédé selon l'une quelconque des revendications précédentes, **caractérisé en ce que** le film polymère présente un polyétheréthercétone sulfoné (SPEEK) et/ou un polyéthersulfone (PES).

6. Procédé selon l'une quelconque des revendications précédentes, **caractérisé en ce que** l'on met en contact l'objet plat, en forme de filet ou de grille, avec un film polymère, qui présente l'au moins un polymère en une proportion comprise entre 10 % en poids et 40 % en poids, en particulier 10 % en poids et 30 % en poids.

7. Membrane perméable aux ions, en particulier membrane échangeuse d'ions, avec une surface profilée, qui est ou peut être fabriquée par un procédé selon l'une quelconque des revendications précédentes, **caractérisée en ce qu'**elle présente une couche polymère comportant un motif de préférence régulier composé de surélévations et/ou de dépressions de forme identique ou différente, dans laquelle les surélévations présentent des bords, qui sont plus hauts que le centre des surélévations.

8. Membrane selon la revendication 7, **caractérisée en ce qu'**elle présente une couche de support, sur laquelle est disposée la couche polymère avec le motif de préférence régulier composé de surélévations et/ou de dépressions de forme identique ou différente.

9. Membrane avec une surface profilée selon la revendication 7 ou 8, **caractérisée en ce qu'**elle présente deux couches polymères assemblées l'une à l'autre, qui présentent respectivement sur le côté placé à l'opposé de l'autre, un motif de préférence régulier composé de surélévations et/ou de dépressions de forme identique ou différente, dans laquelle les deux couches polymères sont assemblées l'une à l'autre de préférence par une couche de support, qui est disposée entre les deux couches polymères, et de préférence une des couches polymères est fabriquée en un matériau échangeur de cations et l'autre en un matériau échangeur d'anions.

10. Membrane selon l'une quelconque des revendications 7 à 9, **caractérisée en ce que** la couche polymère présente une épaisseur comprise entre 10 µm et 300 µm, en particulier d'environ 100 µm.

11. Système de membrane, comprenant au moins une membrane perméable aux ions selon l'une quelconque des revendications 7 à 10.

12. Système de membrane selon la revendication 11, **caractérisé en ce qu'**il fait partie d'un dispositif de dialyse, en particulier d'un dispositif d'électrodialyse.

13. Système de membrane selon la revendication 11 ou 12, comprenant au moins deux membranes perméables aux ions selon l'une quelconque des revendications 7 à 10, **caractérisé en ce qu'**un élément d'espacement séparé est disposé entre les membranes.

14. Système de membrane selon la revendication 11, **caractérisé en ce qu'**il fait partie d'une pile à combustible, d'une batterie redox à écoulement ou d'un dispositif d'électrolyse.

15. Procédé de dessalement par électrodialyse de liquides, dans lequel on utilise au moins un système de membrane selon une des revendications 11 ou 12.
